# FASCICULE DE BREVET EUROPEEN

(11) **EP 1 510 013 B1**
(45) Date de publication et mention de la délivrance du brevet: **08.03.2006**
(21) Numéro de dépôt: 03756022.4
(22) Date de dépôt: 28.05.2003
(51) Int. Cl.: H04B 1/38, H01R 13/646

(54) **TELEPHONE MOBILE POURVU DE MOYENS POUR VERIFIER SON BON FONCTIONNEMENT**
MOBILTELEFON MIT EINEM MITTEL ZUM VERIFIZIEREN DES KORREKTEN BETRIEBES
MOBILE TELEPHONE COMPRISING CORRECT OPERATION VERIFICATION MEANS

(30) Priorité: 31.05.2002 FR 0207040
(43) Date de publication de la demande: 02.03.2005
(73) Titulaire: SAGEM S.A., 75015 Paris (FR)
(72) Inventeur: LERAY, Christian, F-95800 Courdimanche (FR); KLEIN, Patrick, F-95520 Osny (FR); JULIEN, Alain, F-95240 Cormeille en Parisis (FR)
(74) Mandataire: Maillet, Alain
(86) Numéro de dépôt international: PCT/FR2003/001623
(87) Numéro de publication internationale: WO 2003/103172

(56) Documents cités:
- EP-A- 0 497 704
- FR-A- 2 733 349
- GB-A- 2 360 393
- US-A- 6 083 020

## Description

La présente invention concerne un téléphone mobile pourvu de moyens pour vérifier son bon fonctionnement. Elle concerne également un banc prévu pour accueillir un tel téléphone mobile et pour le connecter à un appareil, par exemple à un appareil de mesure.

Il est parfois nécessaire de vérifier le bon fonctionnement d'un téléphone mobile, notamment après sa fabrication, lors d'opérations de maintenance ou lors d'opérations de vérification de réponse au cahier des charges faites chez un opérateur. Ces opérations sont effectuées alors que le téléphone mobile est complètement monté.

Pour ce faire, cette vérification est effectuée en connectant un appareil de mesure approprié à l'entrée/sortie Radio-Fréquence du téléphone. Une simple connexion en parallèle sur l'antenne n'est pas envisageable du fait des problèmes d'adaptation d'impédance qui en résulteraient. Car, cette opération de connexion doit être effectuée en tenant compte de l'adaptation d'impédance de l'entrée/sortie RF du téléphone avec l'entrée/sortie de l'appareil de mesure.

Pour résoudre ce problème, il est connu d'utiliser des moyens pour déconnecter électriquement l'antenne et des moyens pour connecter une sonde d'un appareil de mesure. Par exemple, les moyens pour déconnecter électriquement l'antenne sont constitués d'un interrupteur statique monté sur le téléphone. Ils peuvent également être constitués de moyens rendant l'antenne démontable. Quant aux moyens pour connecter une sonde d'un appareil de mesure, ils sont généralement constitués d'un connecteur supplémentaire adapté en impédance.

US6083020 décrit une téléphone mobile avec une connecteur externe qui déconnecte la antenne interne.

Comme mentionné ci-dessus, le problème que posent ces moyens de déconnexion et connexion est qu'ils doivent toujours assurer une adaptation d'impédance de l'entrée/sortie RF du téléphone avec l'entrée/sortie de l'appareil de mesure. Les solutions proposées ci-dessus, si elles remplissent bien cette condition, s'avèrent être relativement coûteuses à mettre en place. De plus, pour certaines d'entre elles, il n'est pas possible de vérifier le comportement de chacun des téléphones d'un lot de téléphones, mais seulement un échantillon parmi les téléphones de ce lot.

Le but de l'invention est de pallier les inconvénients qui sont mentionnés ci-dessus en proposant une solution qui autorise une parfaite adaptation d'impédance entre l'entrée/sortie d'un téléphone mobile et l'entrée/sortie d'un appareil de mesure ou autre et qui soit simple et peu coûteuse à mettre en oeuvre.

A cet effet, la présente invention concerne de manière générale un téléphone mobile du type comportant un circuit imprimé sur une face duquel est imprimée une pastille pour la connexion d'une antenne, ledit téléphone mobile comportant en outre des moyens pour déconnecter ladite antenne et des moyens pour connecter une sonde. Selon l'invention, il est caractérisé en ce que lesdits moyens pour connecter ladite sonde comprennent une empreinte imprimée sur une face du circuit imprimé opposée à celle sur laquelle la pastille est imprimée et en vis-à-vis de ladite pastille, la pastille étant électriquement reliée dans le circuit imprimé à ladite pastille.

Plus particulièrement, la présente invention peut être appliquée à un téléphone mobile du type où ladite antenne est connectée à la pastille par contact avec ladite pastille d'une paroi d'un système de connexion électriquement relié à ladite antenne. Dans ce cas, en plus de la caractéristique ci-dessus, ledit téléphone peut être avantageusement caractérisé en ce que lesdits moyens pour déconnecter ladite antenne sont constitués de moyens permettant l'accès d'un organe électriquement isolant entre ladite paroi et ladite pastille.

La présente invention peut encore être appliquée à un téléphone mobile tel qu'il vient d'être décrit mais qui soit également du type où les composants électroniques montés sur ledit circuit imprimé sont enfermés dans une platine. Dans ce cas particulier, il peut être avantageux que lesdits moyens permettant l'accès d'un organe électriquement isolant soient constitués d'une ouverture dans ladite platine.

Selon un mode de réalisation de la présente invention, ledit organe électriquement isolant est monté sur le téléphone mobile de manière à pouvoir prendre au moins une position où il est intercalé entre ladite paroi et ladite pastille et une position où il n'est pas intercalé entre ladite paroi et ladite pastille.

La présente invention concerne également un banc pour la connexion d'un téléphone mobile qui est du type qui comporte un circuit imprimé sur une face duquel est imprimée une pastille pour la connexion d'une antenne par contact avec ladite pastille d'une paroi d'un système de connexion électriquement relié à ladite antenne, ledit téléphone mobile comportant, d'une part, des moyens pour connecter une sonde comprenant une empreinte imprimée sur une face du circuit imprimé opposée à celle sur laquelle la pastille est imprimée et en vis-à-vis de ladite pastille et des moyens pour déconnecter ladite antenne constitués de moyens permettant l'accès d'un organe électriquement isolant entre ladite paroi et ladite pastille. Selon l'invention, ce banc est caractérisé en ce qu'il comporte ledit organe électriquement isolant qui est monté sur ledit banc de manière à pouvoir s'intercaler entre ladite paroi et ladite pastille.

Avantageusement, ce banc comporte de plus ladite sonde, celle-ci pouvant prendre au moins une position où elle est connectée sur ladite empreinte et une autre position où elle n'est pas connectée.

Enfin, ce banc peut être partie intégrante d'un appareil, par exemple un appareil de mesure.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :
La Fig. 1 est une vue schématique d'un téléphone mobile selon la présente invention, dans lequel l'organe électriquement isolant extérieur au téléphone est escamoté,
La Fig. 2 est une vue similaire à la Fig. 1 mais dans laquelle l'organe électriquement isolant est en position où il déconnecte électriquement l'antenne,
Les Figs. 3a et 3b sont des vues schématiques d'un banc selon la présente invention pouvant accueillir un téléphone mobile tel que ceux représentés aux Figs. 1 et 2, et
Les Figs. 4a et 4b sont des vues schématiques d'un téléphone mobile selon la présente invention, dans lequel l'organe électriquement isolant monté sur le téléphone est respectivement représenté en position escamotée et en position où il déconnecte l'antenne.

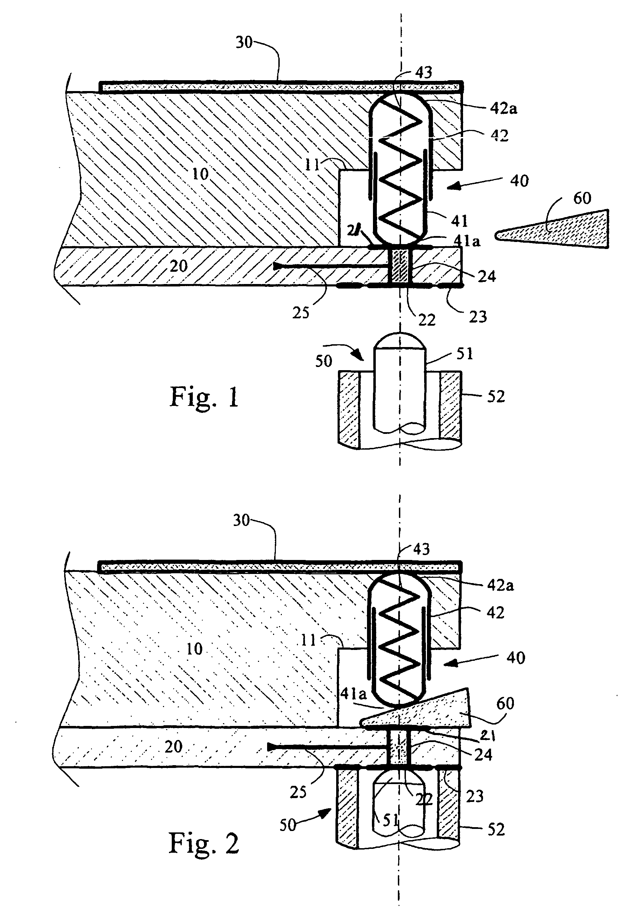

A la Fig. 1, on voit une platine 10 qui renferme un certain nombre de composants électroniques (non représentés) qui sont montés sur un circuit imprimé 20. On voit une pastille conductrice 21 du circuit imprimé 20 et, en vis-à-vis de la pastille 21, des pastilles 22 et 23. Les pastilles 21 et 22 sont connectées entre elles au moyen d'un conducteur 24 interne au circuit imprimé 20.

La platine 10 supporte une antenne 30 qui est, par exemple, du type constitué d'un élément radiatif plan conducteur. Une telle antenne est par exemple du type nommé PIFA comme Planar Inverted-F Antenna (Antenne Plane en forme de F inversé). Un système de connexion 40 est prévu pour relier électriquement une pastille conductrice 21 du circuit imprimé à l'antenne 30. On notera que la pastille conductrice 21 constitue l'entrée/sortie RF du téléphone mobile concerné. Cette entrée/sortie est prévue pour présenter une valeur d'impédance prédéterminée, par exemple 50 Ω. De même, l'extrémité inférieure du système de connexion 40 normalement reliée à la pastille 21 présente une même valeur d'impédance prédéterminée, par exemple 50 Ω.

Dans l'exemple de réalisation représenté, le système de connexion 40 est constitué d'un premier tube 41 qui est emmanché dans un second tube 42 de manière à pouvoir y coulisser librement. Les extrémités de chacun des tubes 41 et 42 sont fermées par des parois saillantes 41a et 42a, par exemple présentant une forme de calotte sphérique, comme c'est le cas dans le présent exemple de réalisation, ou une forme de pointe, de cône ou tronc de cône. Un ressort 43 est prévu entre les deux parois 41a et 42a pour exercer un effort axial tendant à les éloigner l'une de l'autre.

Le système de connexion 40 est tel que, lorsqu'il est monté entre le circuit imprimé 20 et l'antenne 40, le ressort 43 exerce une pression sur les parois 41a et 42a qui elles-mêmes exerceront cette pression sur respectivement le circuit imprimé 20 et l'antenne 30, assurant ainsi de bons contacts électriques entre le système de connexion 40, d'une part, avec le circuit imprimé 20 et, d'autre part, avec l'antenne 30.

On notera que le système de connexion 40 permet à ce que l'antenne 30 soit connectée à la pastille 21 par contact avec ladite pastille 21 de la paroi 41a. Ce système de connexion 40 pourrait par exemple être également constitué d'une lame souple prolongeant l'antenne 30 dont l'extrémité libre viendrait en contact avec la pastille 21.

Selon l'invention, le circuit imprimé 20 comporte une pastille 22 qui est en vis à vis de la pastille 21 et qui servent à des moyens de connexion d'une sonde 50. Cette sonde peut être connectée directement sur la pastille 22 ou via un connecteur approprié. Dans la forme de réalisation représentée, la pastille 22 est ceinte par une pastille 23 en forme d'anneau, lesdites deux pastilles 22 et 23 formant une empreinte coaxiale pour la connexion d'une sonde 50. On voit sur la Fig. 1, l'extrémité d'une sonde de mesure coaxiale 50 avec son conducteur central 51 et son corps 52 normalement relié électriquement à la masse. L'impédance de la sonde 50 a pour valeur la valeur prédéterminée de l'entrée/sortie du téléphone considéré, par exemple 50 Ω.

La platine 10 comporte une ouverture 11 qui dégage la partie basse du système de connexion 40 de manière à permettre l'introduction d'un organe électriquement isolant 60 entre la calotte 41a du système de connexion 40 et la pastille 21 du circuit imprimé 20 constituant l'entrée/sortie RF du téléphone mobile concerné. On notera que cet organe 60 présente avantageusement une forme de coin pour faciliter son intercalation entre le système de connexion 40 et la pastille 21. Cette intercalation peut également être facilitée par la forme de calottes sphériques, de pointe, de cône ou tronc de cône qui est donnée à la paroi 41a du système de connexion 40 normalement en contact avec la pastille 21.

Comme cela est visible à la Fig. 2, lorsque l'organe isolant 60 est introduit entre la paroi 41a du système de connexion 40 et la pastille 21 du circuit imprimé 20, le système de connexion 40 est électriquement isolé de la pastille 21 et, par la même, l'antenne 30 de la pastille 21 ou de l'entrée/sortie du téléphone.

L'avantage qui résulte de cette disposition est que la déconnexion de l'antenne 30 est réalisée au niveau même de la pastille 21, c'est-à-dire à l'endroit exact de la connexion de l'antenne 30 sur le circuit imprimé 20, et que, par conséquent, cette opération est réalisée sans introduire d'élément apportant une impédance parasite aux bornes de l'entrée/sortie du téléphone. Cette déconnexion ne perturbe donc pas la partie radio-fréquence du téléphone.

Une fois cette déconnexion effectuée, il est possible de réaliser la connexion de la sonde 50 avec son conducteur central 51 électriquement relié à la pastille 22 et son corps 52 électriquement relié à la pastille 23, comme cela est visible à la Fig. 2. Du fait que cette connexion est effectuée en vis-à-vis de la pastille 21 constituant l'entrée/sortie radiofréquence, le seul élément qui peut entraîner des perturbations dans l'adaptation d'impédance est le plot 24, mais comme il est de faibles dimensions, de l'ordre du millimètre, ces perturbations sont négligeables. Elles le sont d'autant moins que la connexion des circuits électroniques du téléphone aux pastilles 21 et 22 peut être effectuée par un conducteur 25 interne au circuit imprimé 20, voire au milieu celui-ci rendant alors les perturbations quasi-nulles.

Il résulte des considérations ci-dessus que les impédances du téléphone et de l'appareil de mesure à connecter sont parfaitement adaptées l'une à l'autre.

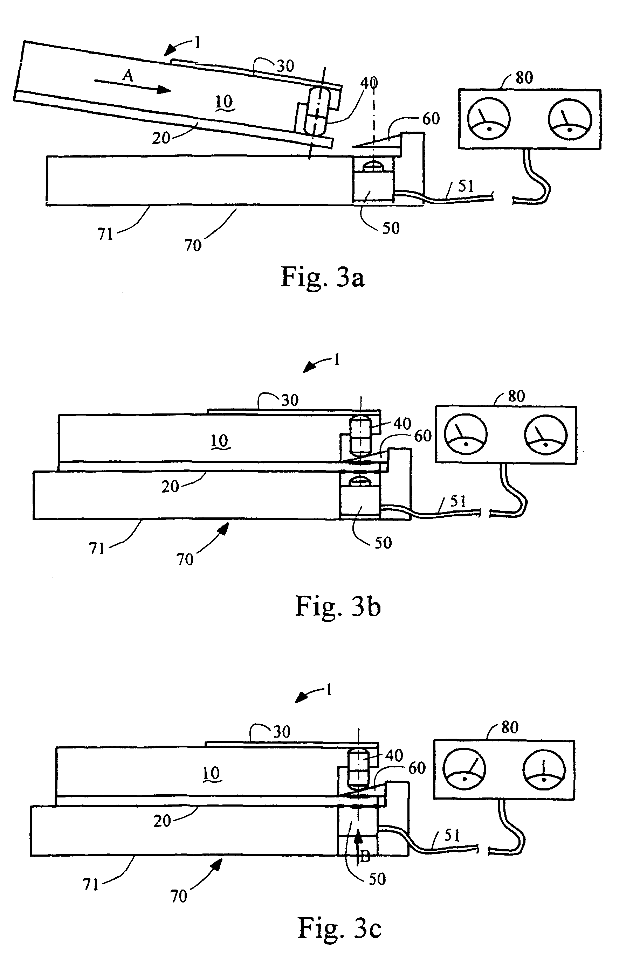

On a représenté à la Fig. 3a un banc 70 qui peut être utilisé pour connecter un appareil de mesure 80 à un téléphone mobile 1. Sur cette Fig. 3a ainsi que sur les autres Figs. 3b et 3c, on peut voir que le téléphone portable 1 comporte, à l'instar de celui qui est montré aux Figs. 1 et 2, une platine 10, un circuit imprimé 20, une antenne 30 et un système de connexion 40. Quant au banc 70, il comporte un support 71 sur lequel est monté un organe 60 et une sonde 50 d'un appareil de mesure 80 auquel elle est reliée par un câble 51.

A la Fig. 3a, le téléphone mobile 1 est amené sur le banc 70 comme le suggère la flèche A. On remarquera que la sonde 50 est dans une position escamotée.

A la Fig. 3b, le téléphone mobile 1 est en place sur le banc 70. On remarquera que l'organe 60 est intercalé entre le système de connexion 40 et le circuit imprimé 20 du téléphone 1 si bien que l'antenne 30 du téléphone 1 est déconnectée. On constatera que la sonde 50 est toujours en position escamotée.

A la Fig. 3c, la sonde 50 est amenée en position de connexion comme le suggère la flèche B. A ce moment là, on se retrouve dans la position de la Fig. 2 où la sonde 50 est connectée au circuit imprimé 10 et assure la connexion des circuits du téléphone 1 avec l'appareil de mesure 80.

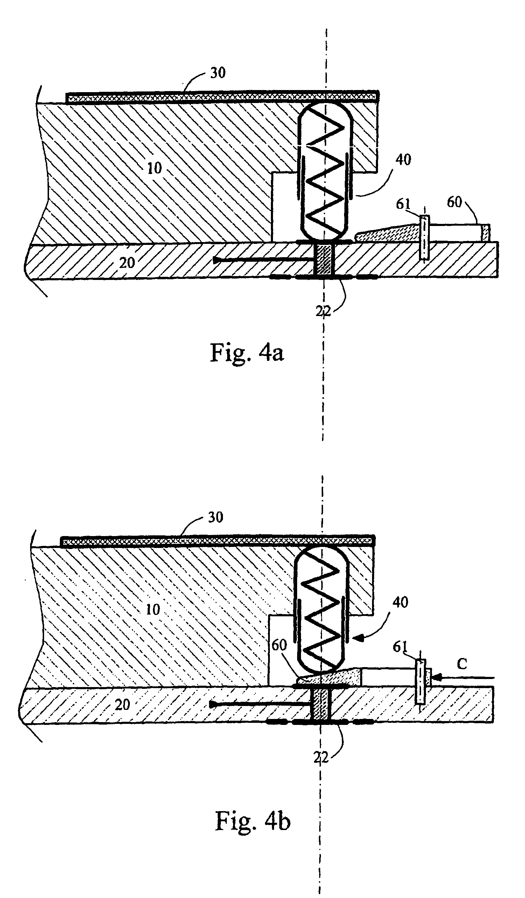

Aux Figs. 4a et 4b, on a représenté un autre mode de réalisation d'un téléphone mobile selon l'invention dans lequel l'organe 60 est monté sur le téléphone mobile lui-même, par exemple comme cela est représenté sur le circuit imprimé 20. Dans ce cas, il est mobile entre une première position où il est escamoté (Fig. 4a) et une seconde position où il se trouve intercalé entre le système de connexion 40 de l'antenne 30 du téléphone 1 et le circuit imprimé 20. (Fig. 4b). Sur les Figs. 4a et 4b, l'organe 60 passe d'une position à l'autre par translation. Une butée 61 dans chaque position est prévue.

Néanmoins, on comprendra qu'il pourrait passer de l'une à l'autre par rotation, ou tout autre mouvement.

De même, la commande de son mouvement d'une position à l'autre peut être effectuée manuellement par l'opérateur des mesures, ou lors du montage sur un banc similaire au banc 70 montré aux Figs. 3a à 3c. Par exemple, lors de ce montage, un doigt de ce banc vient exercer une force sur l'organe 60 qui passe alors de sa première position à sa seconde position. Dans l'exemple de la Fig. 4a, un doigt du banc (non représenté) vient exercer une poussée sur l'organe 60 comme cela est suggéré par la flèche C.

## Revendications

1. Téléphone mobile du type comportant un circuit imprimé (20) sur une face duquel est imprimée une pastille (21) pour la connexion d'une antenne (30), ledit téléphone mobile comportant en outre des moyens pour déconnecter ladite antenne (30) et des moyens pour connecter une sonde (50), **caractérisé en ce que** lesdits moyens pour connecter ladite sonde (50) comprennent une empreinte (22, 23) imprimée sur une face du circuit imprimé (20) opposée à celle sur laquelle la pastille (21) est imprimée et en vis-à-vis de ladite pastille (21), la pastille (22) étant électriquement reliée dans le circuit imprimé (20) à ladite pastille (21).

2. Téléphone mobile selon la revendication 1, du type où ladite antenne (30) est connectée à la pastille (21) par contact avec ladite pastille (21) d'une paroi (41a) d'un système de connexion (40) électriquement relié à ladite antenne (30), **caractérisé en ce que** lesdits moyens pour déconnecter ladite antenne (30) sont constitués de moyens permettant l'accès d'un organe électriquement isolant (60) entre ladite paroi (41a) et ladite pastille (21).

3. Téléphone mobile selon la revendication 2, du type où les composants électroniques montés sur ledit circuit imprimé (20) sont enfermés dans une platine (10), **caractérisé en ce que** lesdits moyens permettant l'accès d'un organe électriquement isolant (60) sont constitués d'une ouverture (11) dans ladite platine (10).

4. Téléphone mobile selon la revendication 2 ou 3, **caractérisé en ce que** ledit organe électriquement isolant (60) est monté sur le téléphone mobile de manière à pouvoir prendre au moins une position où il est intercalé entre ladite paroi (41a) et ladite pastille (21) et une position où il n'est pas intercalé entre ladite paroi (41a) et ladite pastille (21).

5. Banc adapté à la connexion d'un téléphone mobile (1) du type comportant un circuit imprimé (20) sur une face duquel est imprimée une pastille (21) pour la connexion d'une antenne (30) par contact avec ladite pastille (21) d'une paroi (41a) d'un système de connexion (40) électriquement relié à ladite antenne (30), ledit téléphone mobile comportant, d'une part, des moyens pour connecter une sonde (50) comprenant une empreinte (22, 23) imprimée sur une face du circuit imprimé (20) opposée à celle sur laquelle la pastille (21) est imprimée et en vis-à-vis de ladite pastille (21) et des moyens pour déconnecter ladite antenne (30) constitués de moyens permettant l'accès d'un organe électriquement isolant (60) entre ladite paroi (41a) et ladite pastille (21), **caractérisé en ce que** le banc comporte ledit organe (60) électriquement isolant, ce dernier étant monté de manière à pouvoir s'intercaler entre ladite paroi (41a) et ladite pastille (21).

6. Banc selon la revendication 5, **caractérisé en ce qu'**il comporte ladite sonde (50), celle-ci pouvant prendre au moins une position où elle est connectée sur ladite empreinte (22, 23) et une autre position où elle n'est pas connectée.

7. Banc selon la revendication 5 ou 6, **caractérisé en ce qu'**il est partie intégrante d'un appareil de mesure (80).

## Claims

1. Mobile telephone of the type comprising a printed circuit (20) on one face of which there is printed a dot (21) for the connection of an antenna (30), said mobile telephone comprising furthermore means for disconnecting said antenna (30) and means for connecting a sensor (50), **characterised in that** said means for connecting said sensor (50) comprise an imprint (22, 23) printed on a face of the printed circuit (20) opposite to that on which the dot (21) is printed and opposite said dot (21), the dot (22) being electrically connected in the printed circuit (20) to said dot (21).

2. Mobile telephone according to claim 1, of the type where said antenna (30) is connected to the dot (21) by contact with said dot (21) of a wall (41a) of a connection system (40) electrically connected to said antenna (30), **characterised in that** said means for disconnecting said antenna (30) comprise means permitting the access of an electrically insulating member (60) between said wall (41a) and said dot (21).

3. Mobile telephone according to claim 2, of the type where the electronic components mounted on said printed circuit (20) are enclosed within a plate (10), **characterised in that** said means permitting the access of an electrically insulating member (60) comprise an opening (11) in said plate (10).

4. Mobile telephone according to claim 2 or 3, **characterised in that** said electrically insulating member (60) is mounted on the mobile telephone so as to be able to adopt at least one position where it is intercalated between said wall (41a) and said dot (21) and a position where it is not intercalated between said wall (41a) and said dot (21).

5. Bench adapted for connection of a mobile telephone (1) of the type comprising a printed circuit (20) on one face of which there is printed a dot (21) for the connection of an antenna (30) by contact with said dot (21) of a wall (41a) of a connection system (40) electrically connected to said antenna (30), said mobile telephone comprising, on the one hand, means for connecting a sensor (50) comprising an imprint (22, 23) printed on a face of the printed circuit (20) opposite to that on which the dot (21) is printed and opposite said dot (21), and means for disconnecting said antenna (30) comprising means permitting the access of an electrically insulating member (60) between said wall (41a) and said dot (21), **characterised in that** the bench comprises said electrically insulating member (60), the latter being mounted so as to be able to be intercalated between said wall (41a) and said dot (21).

6. Bench according to claim 5, **characterised in that** it comprises said sensor (50), the latter being able to adopt at least one position where it is connected on said imprint (22, 23) and another position where it is not connected.

7. Bench according to claim 5 or 6, **characterised in that** it is an integral part of a measuring device (80).

## Patentansprüche

1. Mobiltelefon des Typs, der eine Leiterplatte (20) enthält, auf welcher auf einer Seite ein Kontaktfleck (21) für den Anschluss einer Antenne (30) gedruckt ist, wobei das Mobiltelefon ferner Mittel zum Abtrennen der Antenne (30) und Mittel zum Anschließen einer Sonde (50) aufweist, **dadurch gekennzeichnet, dass** die Mittel zum Anschließen der Sonde (50) einen Aufdruck (22, 23) aufweisen, der auf eine Seite der Leiterplatte (20) gedruckt ist, die entgegengesetzt zu derjenigen, auf welcher der Kontaktfleck (21) gedruckt ist, und gegenüber dem Kontaktfleck (21) ist, wobei der Kontaktfleck (22) innerhalb der Leiterplatte (20) mit dem Kontaktfleck (21) elektrisch verbunden ist.

2. Mobiltelefon nach Anspruch 1, des Typs, bei dem die Antenne (30) mit dem Kontaktfleck (21) durch einen Kontakt mit dem Kontaktfleck (21) einer Wand (41a) eines Anschlusssystems (40) verbunden ist, das mit der Antenne (30) elektrisch verbunden ist, **dadurch gekennzeichnet, dass** die Mittel zum Abtrennen der Antenne (30) aus Mitteln bestehen, die den Zugang eines elektrisch isolierenden Organs (60) zwischen die Wand (41 a) und den Kontaktfleck (21) erlauben.

3. Mobiltelefon nach Anspruch 2, des Typs, bei dem die elektronischen Bauteile, die auf die Leiterplatte (20) angebracht sind, in einer Platte (10) eingeschlossen sind, **dadurch gekennzeichnet, dass** die Mittel, die den Zugang eines elektrisch isolierenden Organs (60) erlauben, aus einer Öffnung (11) in der Platte (10) bestehen.

4. Mobiltelefon nach Anspruch 2 oder 3, **dadurch gekennzeichnet, dass** das elektrisch isolierende Organ (60) so an das Mobiltelefon angebracht ist, dass es mindestens eine Stellung, in der es zwischen die Wand (41a) und den Kontaktfleck (21) eingeschoben ist, und eine Stellung, in der es nicht zwischen der Wand (41 a) und den Kontaktfleck (21) eingeschoben ist, einnehmen kann.

5. Gestell, das für das Anschließen eines Mobiltelefons (1) des Typs geeignet ist, der eine Leiterplatte (20) umfasst, auf welcher auf einer Seite ein Kontaktfleck (21) für den Anschluss einer Antenne (30) durch einen Kontakt mit dem Kontaktfleck (21) einer Wand (41a) eines Anschlusssystems (40), das elektrisch mit der Antenne (30) verbunden ist, gedruckt ist, wobei das Mobiltelefon einerseits Mittel zum Anschließen einer Sonde (50) aufweist, die einen Aufdruck (22, 23) aufweisen, der auf eine Seite der Leiterplatte (20) gedruckt ist, die entgegengesetzt zu derjenigen, auf welcher der Kontaktfleck (21) gedruckt ist, und gegenüber dem Kontaktfleck (21) ist, und andererseits Mittel zum Abtrennen der Antenne (30), die aus Mitteln bestehen, die den Zugang eines elektrisch isolierenden Organs (60) zwischen die Wand (41a) und den Kontaktfleck (21) erlauben, **dadurch gekennzeichnet, dass** das Gestell das elektrisch isolierende Organ (60) aufweist, wobei Letzteres so angebracht ist, dass es sich zwischen die Wand (41a) und den Kontaktfleck (21) einfügen kann.

6. Gestell nach Anspruch 5, **dadurch gekennzeichnet, dass** es die Sonde (50) aufweist, wobei diese mindestens eine Stellung, in der sie an dem Aufdruck (22, 23) angeschlossen ist, und eine andere Stellung, in der sie nicht angeschlossen ist, einnehmen kann.

7. Gestell nach Anspruch 5 oder 6, **dadurch gekennzeichnet, dass** es fester Bestandteil eines Messgeräts (80) ist.
